# EUROPÄISCHE PATENTSCHRIFT

(11) **EP 2 558 198 B1**
(45) Veröffentlichungstag und Bekanntmachung des Hinweises auf die Patenterteilung: **14.12.2022**
(21) Anmeldenummer: 11768541.2
(22) Anmeldetag: 12.04.2011
(51) Int. Cl.: B01J 23/22

(54) **KATALYSATOR ZUR OXIDATION VON SO2 ZU SO3**
CATALYST FOR THE OXIDATION OF SO2 TO SO3
CATALYSEUR D'OXYDATION DE SO2 EN SO3

(30) Priorität: 12.04.2010 EP 10159670
(43) Veröffentlichungstag der Anmeldung: 20.02.2013
(73) Patentinhaber: BASF SE, 67056 Ludwigshafen am Rhein (DE)
(72) Erfinder: KRÄMER, Michael, 68199 Mannheim (DE); SCHUBERT, Markus, 67071 Ludwigshafen (DE); LAUTENSACK, Thomas, 67317 Altleiningen (DE); HILL, Thomas, 67071 Ludwigshafen (DE); KÖRNER, Reinhard, 67227 Frankenthal (DE); ROSOWSKI, Frank, 68239 Mannheim (DE); ZÜHLKE, Jürgen, 67346 Speyer (DE)
(74) Vertreter: BASF IP Association
(86) Internationale Anmeldenummer: PCT/IB2011/051570
(87) Internationale Veröffentlichungsnummer: WO 2011/128841

(56) Entgegenhaltungen:
- CN-A- 1 417 110
- GB-A- 1 526 873
- JP-A- 2002 285 691
- JP-A- 2003 073 997
- US-A- 3 789 019
- US-A- 3 987 153
- US-A- 4 284 530

## Beschreibung

Die Erfindung betrifft einen Katalysator zur Oxidation von SO₂ zu SO₃ sowie ein Verfahren zu seiner Herstellung und seine Verwendung in einem Verfahren zur Oxidation von SO₂ zu SO₃.

Schwefelsäure wird heutzutage quasi ausschließlich über die Oxidation von Schwefeldioxid (SO₂) zu Schwefeltrioxid (SO₃) im so genannten Kontakt-/Doppelkontaktver-fahren mit anschließender Hydrolyse gewonnen. Dieser Prozess ist dadurch gekennzeichnet, dass SO₂ mit molekularem Sauerstoff an Vanadiumhaltigen Katalysatoren in mehreren hintereinander liegenden adiabaten Schichten (Horden) zu SO₃ oxidiert wird. Der SO₂-Gehalt des Eduktgases liegt üblicherweise zwischen 0,01 und 50 Vol.-% und das Verhältnis von O₂/SO₂ zwischen 0,5 und 5. Eine bevorzugte Sauerstoffquelle ist Luft. Ein Teil des Schwefeldioxids wird in den einzelnen Horden umgesetzt, wobei das Gas jeweils zwischen den einzelnen Horden abgekühlt wird (Kontaktverfahren). Bereits gebildetes SO₃ kann durch Zwischenabsorption aus dem Gasstrom entfernt werden, um höhere Gesamtumsätze zu erzielen (Doppelkontaktverfahren). Die Umsetzung erfolgt je nach Horde in einem Temperaturbereich zwischen 340°C bis 680°C, wobei die maximale Temperatur aufgrund des sinkenden SO₂-Gehaltes mit zunehmender Hordennummer abnimmt.

Heutige kommerzielle Katalysatoren enthalten üblicherweise neben der Aktivkomponente Vanadiumpentoxid (V₂O₅) auch Alkalimetalloxide (M₂O), vor allem Kaliumoxid K₂O aber auch Natriumoxid Na₂O und/oder Cäsiumoxid Cs₂O, sowie Sulfat. Als Träger für die zuvor erwähnten Komponenten werden üblicherweise poröse Oxide verwendet wie beispielsweise Siliziumdioxid SiO₂. Unter Reaktionsbedingungen bildet sich auf dem Trägermaterial eine Alkalipyrosulfatschmelze aus, in welcher die Aktivkomponente in Form von Oxosulfat-Komplexen gelöst wird (Catal. Rev. - Sci. Eng., 1978, Bd. 17(2), Seiten 203 bis 272). Man spricht von einem supported liquid phase catalyst.

Die Gehalte an V₂O₅ liegen meist zwischen 3 und 10 Gew.-%, die an Alkalimetalloxiden je nach verwendeter Spezies bzw. je nach Kombination unterschiedlicher Alkalimetalle zwischen 6 und 26 Gew.-%, wobei das molare Verhältnis von Alkalimetall zu Vanadium (M/V Verhältnis) üblicherweise zwischen 2 und 5,5 liegt. Der Gehalt an K₂O liegt üblicherweise zwischen 7 und 14 Gew.-% und an Sulfat zwischen 12 und 30 Gew.-%. Daneben wurde über die Verwendung zahlreicher weiterer zusätzlicher Elemente berichtet, wie beispielsweise Chrom, Eisen, Aluminium, Phosphor, Mangan und Bor. Als poröses Trägermaterial wird überwiegend SiO₂ eingesetzt.

Die Herstellung derartiger Katalysatoren im industriellen Maßstab erfolgt üblicherweise durch Vermischen wässriger Lösungen bzw. Suspensionen der verschiedenen Aktivkomponenten, beispielsweise entsprechender Vanadiumverbindungen (V₂O₅, Ammoniumvanadat, Alkalimetallvanadate bzw. Vanadylsulfate) mit Alkalimetallsalzen (Nitraten, Carbonaten, Oxiden, Hydroxiden, Sulfaten), unter Umständen mit Schwefelsäure und sonstigen Komponenten, welche als Porenbildner bzw. Schmiermittel fungieren können wie beispielsweise Schwefel, Stärke oder Grafit, mit dem Trägermaterial. Die daraus resultierende zähe Masse wird im nächsten Schritt zu den gewünschten Formkörpern verarbeitet und schließlich thermisch behandelt (Trocknung und Kalzinierung).

Die Eigenschaften des Katalysators werden zum einen durch den Aktivmassengehalt, die Art und Menge des verwendeten Alkalimetalls, das M/V Verhältnis und durch die Nutzung etwaiger weiterer Promotoren bestimmt, zum anderen aber auch durch die Art des verwendeten Trägermaterials. Ein unter Reaktionsbedingungen stabiles Trägermaterial hilft, die Oberfläche der Schmelze und damit die Anzahl der zugänglichen gelösten Aktivkomponentenkomplexe zu erhöhen. Die Porenstruktur des Trägermaterials hat dabei eine zentrale Bedeutung. Kleine Poren stabilisieren den flüssigen Aggregatzustand und erniedrigen daher den Schmelzpunkt der Salzschmelze (React. Kinet. Catal. Lett., 1986, Bd. 30 (1), Seiten 9 bis 15) und bringen zudem eine besonders hohe Oberfläche. Beide Effekte führen zu einer erhöhten Reaktivität im unteren Temperaturbereich, d.h. gemäß der in DD92905 getroffenen Einordnung im Temperaturbereich < 400°C. Große Poren sind vor allem bei hohen Temperaturen (Reaktionstemperaturen > 440°C) relevant, um eine Transportlimitierung zu vermeiden.

Neben der katalytischen Aktivität eines Katalysators ist auch seine Lebensdauer von immenser Bedeutung. Die Lebensdauer wird zum einen durch Giftstoffe beeinflusst, die sowohl von Außen mit dem Feedgas in den Reaktor gelangen und sich allmählich auf der Schüttung anreichern, zum andern aber auch durch Verunreinigungen, die in den Einsatzstoffen wie dem Siliciumdioxidträger enthalten sind, die unter Reaktionsbedingungen mobil werden und mit Sulfationen reagieren können und damit die Eigenschaften des Katalysators negativ beeinflussen. Beispiele für solche Verunreinigungen sind Erdalkalimetallverbindungen (wie Kalzium-Verbindungen), Eisen- oder Aluminiumverbindungen. Daneben kann der Katalysator bei den extremen Bedingungen auch schlichtweg sintern und so allmählich seine aktive Oberfläche einbüßen. Ganz besonders wichtig ist auch der Druckabfall über die Schüttung, der möglichst gering sein und über die Lebensdauer hinweg auch möglichst wenig zunehmen sollte. Hierzu ist es erforderlich, dass ein frisch hergestellter Katalysator über möglichst gute mechanische Eigenschaften verfügt. Typische Messgrößen hierfür sind etwa die Abriebsstabilität oder der Widerstand gegen das Eindringen einer Schneide (Schneidhärte). Daneben spielt auch die Rütteldichte des Katalysators eine zentrale Rolle, da nur so gewährleistet werden kann, dass eine bestimmte notwendige Masse an Aktivmasse in das gegebene Reaktorvolumen gefüllt wird.

Als inerte Trägermaterialien für kommerzielle Schwefelsäurekatalysatoren werden vor allem kostengünstige, poröse Materialien auf der Basis von SiO₂ eingesetzt. Dabei finden ebenso synthetische Varianten von SiO₂ als auch natürliche Formen von SiO₂ Verwendung.

Mit synthetischen Varianten können generell die gewünschten Trägereigenschaften wie etwa Porenstruktur oder mechanische Stabilität gut eingestellt werden. RU 2186620 beschreibt beispielsweise die Nutzung von gefälltem Silikagel als Träger für einen Schwefelsäurekatalysator. DE 1235274 offenbart ein Verfahren zur Oxidation von SO₂ unter Verwendung eines Katalysators auf der Basis von V₂O₅/K₂O/SiO₂, der dadurch gekennzeichnet ist, dass bei unterschiedlichen Arbeitstemperaturen Katalysatoren mit einem jeweils entsprechend angepassten Porengefüge verwendet werden. Diese Verbindungen können beispielsweise durch Nutzung von bestimmten synthetischen SiO₂ Komponenten wie ausgefälltem Natrium-Wasserglas dargestellt werden. SU 1616-688 beschreibt die Verwendung von amorphem synthetischen SiO₂ mit hohen Oberflächen. Nachteilig bei solchen Komponenten sind jedoch die relativ hohen Produktions- und Materialkosten.

Daher werden in der Praxis häufig natürlich vorkommende Siliziumdioxide (auch Kieselgur oder Diatomeenerde genannt) eingesetzt, die als Naturprodukt deutlich günstiger zu gewinnen sind, in ihren Eigenschaften jedoch oftmals von dem gewünschten Optimum abweichen. Die Autoren von SU 1803180 verwenden Kieselgur als Träger für einen entsprechenden Katalysator. CN 1417110 offenbart einen Katalysator zur Oxidation von SO₂ auf der Basis von V₂O₅ und K₂SO₄, bei dem die verwendete Kieselgur aus einer bestimmten Provinz in China stammt. US 3789019A und US 3987153A offenbaren weitere Beipiele von Katalysatoren zur Oxidation von SO₂ zu SO₃, erhaltend eine Diatomeenerde als Träger, Vanadium und Promotoren.

Die Eigenschaften eines Schwefelsäurekatalysators können auch durch die Art der Vorbehandlung des reinen natürlichen Trägermaterials beeinflusst werden. Fedoseew et al. berichten beispielsweise über eine Modifikation des Porengefüges (Verschiebung des Maximums zu kleineren Poren) eines Vanadium-basierten Schwefelsäurekatalysators durch mechanische Zerkleinerung der Kieselgur (Sbornik Nauchnykh Trudov - Rossiiskii Khimiko-Tekhnologicheskii Universitet im. D. I. Mendeleeva (2000), (178, Protsessy i Materialy Khimicheskoi Promyshlennosti), 34-36 CODEN: SNTRCV). Dies resultierte in einer verbesserten mechanischen Stabilität. Nachteilig an dieser Modifikation ist zum einen die Anwendung eines zusätzlichen Arbeitsschrittes (12 h Zerkleinerung des Trägers) und zum anderen die daraus resultierende erniedrigte katalytische Aktivität.

SU 1824235 beschreibt einen Katalysator zur Oxidation von SO₂ zu SO₃ für ein Hochtemperaturverfahren, der dadurch charakterisiert ist, dass der verwendete Kieselgurträger zwischen 10 und 30 Gew.-% Tonmineralien enthält, bei 600 bis 1000 °C kalziniert und anschließend vor dem Vermischen mit den eigentlichen Aktivkomponenten zerkleinert wird, wobei mindestens 40 % der kalzinierten Kieselgur einen Teilchendurchmesser von < 10 µm aufweisen. Auch in diesem Beispiel ist wiederum ein zusätzlicher Arbeitsschritt (Zerkleinerung) notwendig.

Zahlreiche Schriften beschreiben eine Optimierung der Katalysatoreigenschaften durch die gemeinsame Nutzung von natürlichen und synthetischen SiO₂ Varianten. DE 4000609 offenbart einen Katalysator für die Oxidation von SO₂ bestehend aus Vanadium- und Alkalimetallverbindungen auf einem Trägermaterial mit einer definierten Porenstruktur, der dadurch gekennzeichnet ist, dass unterschiedliche SiO₂ Komponenten mit verschiedenen Porendurchmessern in definierten Verhältnissen miteinander gemischt werden, so dass der resultierende Träger über einen hohen Anteil an Poren mit einem Durchmesser < 200 nm verfügt. Ein ähnlicher Ansatz wird in WO 2006/033588, WO 2006/033589 und RU 2244590 verfolgt. Dort werden Katalysatoren für die Oxidation von SO₂ auf der Basis von V₂O₅, Alkalimetalloxiden, Schwefeloxid und SiO₂ beschrieben mit einer auf den jeweiligen Arbeitstemperaturbereich angepassten oligomodalen Porenverteilung. Die Einstellung eines solchen definierten Porengefüges kann beispielsweise durch Kombination von synthetischem Siliziumdioxid mit natürlicher Kieselgur erfolgen. RU 2080176 beschreibt einen positiven Effekt auf die Härte und Aktivität eines Schwefelsäurekatalysators auf Basis von V₂O₅/K₂O/SO₄/SiO₂ durch eine Beimischung von bei der Gewinnung von Silizium anfallendem SiO₂ Abfall zur Kieselgur. Ein ähnlicher Effekt wird in SU 1558-463 durch die Zugabe von Silikasolen zur Kieselgur gefunden.

US 1952057, FR 691356, GB 337761 sowie GB 343441 beschreiben eine kombinierte Nutzung von natürlicher Kieselgur mit synthetischem SiO₂ in Form der entsprechenden Kaliumwassergläser. Die synthetische Silizium-Komponente wird dabei aus einer wässrigen Lösung beispielsweise durch Fällung auf die Kieselgur aufgebracht, so dass schließlich mit SiO₂ ummantelte Kieselgurpartikel entstehen, die mit den entsprechenden Aktivkomponenten getränkt werden können. Die so hergestellten Katalysatoren zeichnen sich durch verbesserte Eigenschaften wie Härte oder katalytische Aktivität aus.

DE 2500264 offenbart einen Vanadium-basierten Katalysator zur Oxidation von SO₂, wobei als Träger eine mit Kaliumwasserglaslösung versetzte Mischung aus Kieselgur mit Asbest und Bentonit als Trägerkomponenten mit erhöhter mechanischer Stabilität verwendet werden.

Neben einer ausschließlichen Verwendung von synthetischen oder natürlichen SiO₂ Varianten oder der Mischung von synthetischen mit natürlichen SiO₂ Varianten können auch Mischungen aus unterschiedlichen natürlichen SiO₂ Varianten verwendet werden.

Jíru und Brüll beschreiben eine Modifizierung der Porenstruktur einer bestimmten Art von Kieselgur durch die Zugabe von 30 Gew.-% grobkörnigem Kieselgurabfall desselben Trägers, was zu einer Verschiebung des mittleren Porendurchmessers von 56 nm zu 80 nm führte (Chemicky Prumysl (1957), 7, 652-4 CODEN: CHPUA4; ISSN: 0009-2789). PL 72384 beanspruchen einen SiO₂ Träger auf der Basis von natürlicher Kieselgur für einen Vanadium-Katalysator, der dadurch gekennzeichnet ist, dass 20-35 % der Partikel zwischen 1 und 5 µm, 10-25 % zwischen 5 und 10 µm, 10-25 % zwischen 20 und 40 µm, 10-25 % zwischen 40 und 75 µm und 1-7 % größer als 75 µm sind und der durch Kalzinieren der Kieselgur bei 900°C mit anschließender Vermischung mit der unkalzinierten Kieselgur im Verhältnis 1:1 bis 1:4 dargestellt wird. DE 2640169 beschreibt einen Vanadium-basierten Schwefelsäurekatalysator mit hoher Beständigkeit und Wirksamkeit, bei dem als Träger eine fein verteilte Süßwasser-Diatomeenerde verwendet wird, die mindestens 40 Gew.-% einer kalzinierten, aus den Kieselalgen Melosira granulata entstandenen Diatomeenerde enthält, wobei die Diatomeenerde vor dem Vermischen mit der Aktivkomponente, geeigneten Beschleunigern und Promotoren bei einer Temperatur zwischen 510 und 1010°C kalziniert wurde. Die so dargestellten Katalysatoren verfügen über eine höhere katalytische Aktivität und mechanische Beständigkeit im Vergleich zu den Katalysatoren, die ausschließlich aus der entsprechenden Diatomeenerde in unkalzinierter und/oder unzerkleinerter Form bestehen, wobei es irrelevant ist, ob der zu zerkleinernde Anteil an Diatomeenerde vor oder nach der Kalzinierung zermahlen wird.

Es ist somit bekannt, dass zur Optimierung der Eigenschaften von Schwefelsäurekatalysatoren unterschiedlich vorbehandelte Diatomeenerden desselben Typs untereinander bzw. Diatomeenerden mit synthetischen SiO₂-Komponenten gemischt werden können. Nachteile der Verwendung von Mischungen aus kalzinierten und unkalzinierten Kieselguren als Träger für Schwefelsäurekatalysatoren sind zum einen die Notwendigkeit eines weiteren Prozessschrittes (Kalzinieren der Kieselgur) sowie die mögliche Überführung der amorphen SiO₂ Form in die gesundheitlich bedenkliche Cristobalit-Modifikation.

Bei Diatomeenerden (auch Kieselguren genannt) handelt es sich um natürlich vorkommende Siliziumdioxidschalen fossiler Kieselalgen (Diatomeen), welche generell nach der Struktur die ihnen zugrunde liegenden Kieselalgen unterteilt werden (vgl. Adl et al., Journal of Eukaryotic Microbiology, 2005, Bd. 52, Seite 399). Diese Systematik beruht auf der Architektur der silikathaltigen Schale der Algen (Frustel), d. h. beispielsweise auf ihrer Größe oder Symmetrie. Gemäß ihrer Symmetrie kann eine Klassifizierung der Kieselalgen in radiärsymmetrische Centrales und bilateralsymmetrische Pennales erfolgen. Eine weitere Differenzierung der Pennales erfolgt anhand der Anwesenheit einer sogenannten Raphe, eines Bewegungsorganells, sowie deren Ausgestaltung. Bei den Centrales erfolgt eine weitere Einteilung anhand der Form der Zellen in Aufsicht:
Es gibt beispielsweise tellerförmige Varianten wie die Coscinodicineae, die sich durch eine runde, tellerförmige Geometrie (in Aufsicht) ohne Fortsätze auszeichnen, wobei die Höhe geringer ist als der Durchmesser der Schale, und die eine gewölbte Seitenansicht zeigen. Daneben gibt es Diatomeen mit einer oft langgestreckten, zylindrischen Schale, die in der Seitenansicht meist rechteckig erscheinen wie beispielsweise die Arten Aulacoseira oder Melosira. Weitere Kieselalgenvertreter sind beispielsweise die stäbchenförmigen Asterionella, die sogenannten Eunotia, deren lange Schale gekrümmt ist, die schiffchenförmigen Navicula oder die langgestreckten Nitzschia.

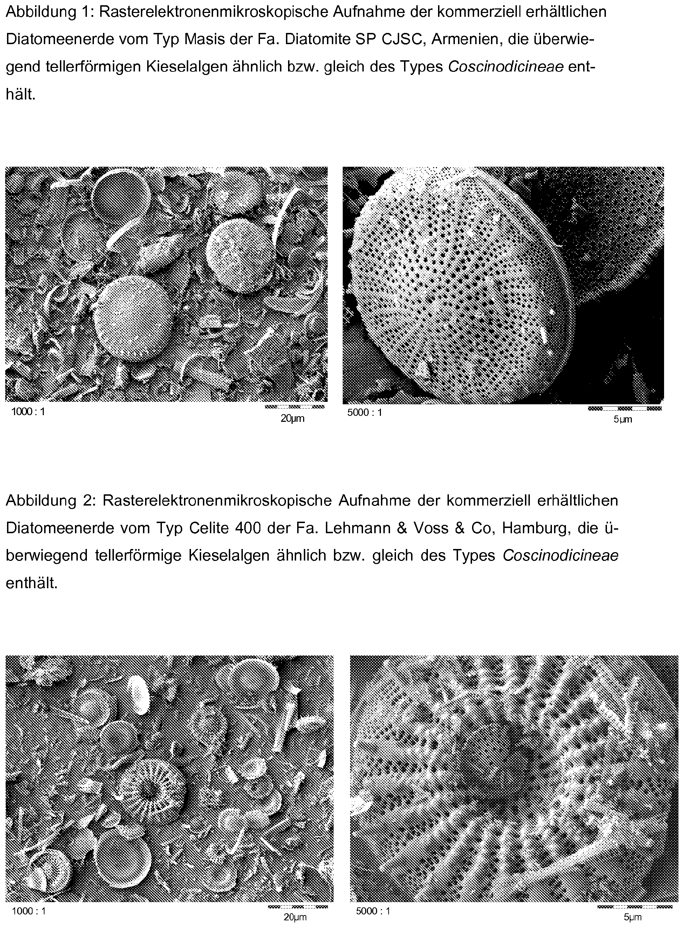

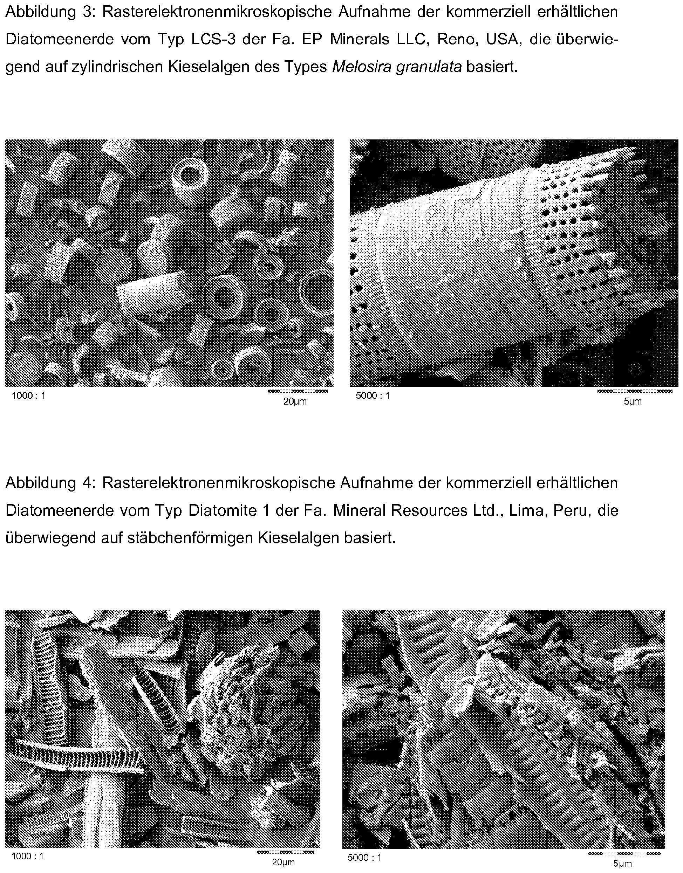

Interessanterweise sind in den bekannten Lagerstätten von Diatomeenerden die gefundenen Strukturtypen sehr einheitlich, so dass in einer Diatomeenerde überwiegend nur eine Form von Kieselalgen zu erkennen ist. Kommerzielle erhältliche Diatomeenerden des Typs Celite 209 (Kalifornien), Celite 400 (Mexiko), Masis (Armenien), AG-WX1 (China), AG-WX3 (China), CY-100 (China) zeichnen sich beispielsweise durch überwiegend tellerförmige Strukturen (die beispielsweise auf Coscinodicineae zurückgehen) aus, während die in Nordamerika (Nevada bzw. Oregon) von der Firma EP Minerals LLC abgebauten Materialien des Typs MN, FN2-Z bzw. LCS überwiegend zylindrische Formen (Melosira) enthalten. Die Abbildungen 1 und 2 zeigen rasterelektronenmikroskopische Aufnahmen kommerziell erhältlicher Diatomeenerden (Masis bzw. Celite 400), die überwiegend auf tellerförmigen Kieselalgen basieren. Abbildung 3 zeigt eine entsprechende Aufnahme einer Diatomeenerde, welche auf zylindrische Kieselalgen des Typs Melosira zurückgeht. Daneben finden sich auch Diatomeenerden, die über keine der oben angeführten Symmetrien verfügen, wie z. B. die in Peru vorkommende stäbchenförmige Diatomeenerde des Types Diatomite 1 von Mineral Resources Co. oder der stäbchenförmige Typ Tipo der Firma CIEMIL aus Brasilien. Abbildung 4 zeigt eine rasterelektronenmikroskopische Aufnahme einer entsprechenden Diatomeenerde (Diatomite 1).

Es war eine Aufgabe der vorliegenden Erfindung einen Katalysator zur Oxidation von SO₂ zu SO₃ bereitzustellen, der in einem möglichst breiten Temperaturbereich einsetzbar und möglichst wirtschaftlich darstellbar ist, wobei insbesondere die mechanische Stabilität des Katalysators verbessert werden sollte.

Diese Aufgabe wird gelöst durch einen Katalysator, dessen Träger mindestens zwei verschiedene nicht vorkalzinierte Diatomeenerden enthält, die auf unterschiedliche geografische Vorkommen und somit auf unterschiedliche Strukturtypen von Kieselalgen zurückgehen.

Gegenstand der Erfindung ist somit ein Katalysator zur Oxidation von SO₂ zu SO₃, erhalten aus mindestens zwei verschiedenen natürlich vorkommenden Diatomeenerden mit einem Gehalt an Cristobalit von < 5 Gew.-% und Vanadiumverbindungen, Alkalimetallverbindungen und Sulfat, dadurch gekennzeichnet, dass die mindestens zwei verschiedenen natürlich vorkommende Diatomeenerden aus unterschiedlichen geographischen Vorkommen stammen und sich im Strukturtyp der ihnen zugrundeliegenden Kieselalgen unterscheiden.

Eine bevorzugte Ausführungsform der Erfindung ist ein Katalysator zur Oxidation von SO₂ zu SO₃, erhalten aus mindestens zwei verschiedenen natürlich vorkommenden Diatomeenerden mit einem Gehalt an Cristobalit von < 5 Gew.-% und Vanadiumverbindungen, Alkalimetallverbindungen und Sulfat, dadurch gekennzeichnet, dass die mindestens zwei verschiedenen natürlich vorkommende Diatomeenerden aus unterschiedlichen geographischen Vorkommen stammen und sich im Strukturtyp der ihnen zugrundeliegenden Kieselalgen unterscheiden, wobei die verschiedenen Strukturtypen ausgewählt sind aus der Gruppe, bestehend aus tellerförmigen, zylinderförmigen und stäbchenförmigen Strukturtypen.

Die erfindungsgemäßen Katalysatoren verfügen über deutlich bessere Eigenschaften, insbesondere über eine verbesserte mechanische Stabilität, als die bislang bekannten Katalysatoren.

Im Rahmen dieser Erfindung wird eine Diatomeenerde dem Strukturtyp der ihr zugrundeliegenden Kieselalge zugeordnet, deren Kieselalgenform in einer elektronenmikroskopischen Aufnahme überwiegend zu erkennen ist. Beispiele für elektronenmikroskopischen Aufnahmen von verschiedenen tellerförmigen, zylindrischen oder stäbchenförmigen Diatomeenerden, welche überwiegend eine Kieselalgenform zeigen, sind in den Abbildungen 1 bis 4 gezeigt.

Zur Herstellung der erfindungsgemäßen Katalysatoren geeignete Diatomeenerden sollten einen Gehalt an Aluminiumoxid Al₂O₃ von kleiner als 5 Gew.-%, bevorzugt kleiner als 2,6 Gew.-% und insbesondere kleiner als 2,2 Gew.-% aufweisen. Ihr Gehalt an Eisen(III)oxid Fe₂O₃ sollte kleiner als 2 Gew.-% sein, bevorzugt kleiner als 1,5 Gew.-% und insbesondere kleiner als 1,2 Gew.-% sein. Ihr Gehalt an der Summe von Erdalkalimetalloxiden (Magnesiumoxid MgO + Kalziumoxid CaO) sollte kleiner als 1,8 Gew.-%, bevorzugt kleiner als 1,4 Gew.-% und insbesondere kleiner als 1,0 Gew.-% sein.

Im Rahmen dieser Erfindung bedeutet nicht kalzinierte Diatomeenerde, dass eine Diatomeenerde vor dem Vermischen mit den Aktivkomponenten nicht bei Temperaturen oberhalb von 500°C, bevorzugt nicht oberhalb von 400°C und insbesondere nicht oberhalb von 320°C behandelt wurde. Charakteristisches Merkmal der unkalzinierten Diatomeenerde ist, dass das Material quasi amorph ist, d.h. der Gehalt an Cristobalit bei < 5 Gew.-%, bevorzugt < 2 Gew.-% und besonders bevorzugt < 1 Gew.-% liegt (bestimmt mittels Röntgenbeugungsanalyse).

Der mediane volumenbezogene Porendurchmesser (d. h. der Porendurchmesser oberhalb und unterhalb dessen sich jeweils 50% des gesamten Porenvolumens befinden, bestimmt mittels Quecksilberporosimetrie) der verschiedenen im Rahmen dieser Erfindung verwendbaren Diatomeenerden sollte zwischen 0,1 µm und 10 µm, bevorzugt zwischen 0,5 µm und 9 µm und insbesondere zwischen 0,7 µm und 7 µm liegen. Der mediane volumenbezogene Porendurchmesser erfindungsgemäßer Mischungen von unkalzinierten Diatomeenerden sollte zwischen 0,5 µm und 9 µm, bevorzugt zwischen 0,8 und 7 µm und insbesondere zwischen 0,9 und 5 µm liegen. Dabei kann die Form der Porenverteilung der erfindungsgemäßen Mischungen deutlich von der der einzelnen Diatomeenerde abweichen. Oligomodale oder bimodale Porenverteilungen oder monomodale Porenverteilungen mit ausgeprägten Schultern können je nach Kombination der unterschiedlichen Diatomeenerden resultieren. Die Einstellung eines bestimmten medianen volumenbezogenen Porendurchmessers innerhalb der oben beschriebenen Grenzen durch Mischen unterschiedlicher Diatomeenerden in verschiedenen Verhältnissen ist prinzipiell möglich.

Bei der Herstellung der erfindungsgemäßen Schwefelsäurekatalysatoren kommt es durch partielles Zerkleinern der Diatomeenstrukturen in Folge der mechanischen Beanspruchung während des Vermischungsschrittes bzw. des Ausformungsschrittes sowie durch Aufbringen der Aktivmasse auf den Diatomeenerdenträger zu einer Verschiebung der medianen volumenbezogenen Porendurchmesser, so dass der resultierende Katalysator in der Regel einen deutlich geringeren medianen volumenbezogenen Porendurchmesser besitzt als der zugrunde liegende Träger. Der mediane volumenbezogene Porendurchmesser liegt für die erfindungsgemäßen Schwefelsäurekatalysatoren zwischen 0,1 µm und 5 µm, bevorzugt zwischen 0,2 µm und 4 µm und insbesondere zwischen 0,3 µm und 3,2 µm, wobei die Form der Porenverteilung der Katalysatoren, deren Träger auf Mischungen von unkalzinierten Diatomeenerden basieren, durch die Art und das Verhältnis der unterschiedlichen Diatomeenerden eingestellt werden kann, so dass auch hier oligomodale oder bimodale Porenverteilungen bzw. monomodale Porenverteilungen mit ausgeprägten Schultern resultieren können.

Besonders gute Katalysatoren ergeben sich bei Verwendung eines Trägermaterials, bei dem jede der verschiedenen enthaltenen Diatomeenerden einen Anteil bezogen auf die gesamte Trägermasse von mindestens 10 Gew.-%, bevorzugt von mindestens 15 Gew.-% und besonders bevorzugt von mindestens 20 Gew.-% hat.

Die erfindungsgemäßen Katalysatoren weisen im Allgemeinen eine Schneidhärte von mindestens 60 N, bevorzugt von mindestens 70 N und besonders bevorzugt von mindestens 80 N auf. Ihr Abrieb liegt in der Regel bei < 4 Gew.-%, bevorzugt bei < 3 Gew.- %. Ihre Rütteldichte liegt im Allgemeinen im Bereich von 400 g/l bis 520 g/l, bevorzugt im Bereich von 425 g/l bis 500 g/l. Ihre Porosität (bestimmt über die Toluolaufnahme des Materials) liegt mindestens bei 0,38 ml/g, bevorzugt bei mindestens 0,4 ml/g und besonders bevorzugt bei mindestens 0,45 ml/g.

Zur Bestimmung der Rütteldichte eines Katalysators werden ca. 1 Liter der Formkörper über eine Rüttelrinne in einen geraden Kunststoff-Messzylinder mit einem Volumen von 2 Litern gegeben. Dieser Messzylinder befindet sich auf einem Stampfvolumeter, welches über eine definierte Zeit klopft und so die Formkörper im Messzylinder verdichtet. Die Ermittlung der Rütteldichte erfolgt schließlich aus dem Gewicht und dem Volumen.

Die charakteristischen physikalischen Katalysatorkenngrößen Schneidhärte, Abrieb und Porosität wurde in Analogie zu den in EP 0019174 beschriebenen Vorschriften ermittelt. Die Bestimmung der katalytischen Aktivität wurde gemäß dem in DE4000609 beschriebenen Verfahren durchgeführt. Als Bezugskatalysator wurde ein handelsüblicher Katalysator gemäß DE 4000609, Beispiel 3 verwendet.

Ein weiterer Gegenstand der Erfindung ist ein Verfahren zur Herstellung der oben beschriebenen Katalysatoren zur Oxidation von SO₂ zu SO₃, dadurch gekennzeichnet, dass man mindestens zwei verschiedene natürlich vorkommende Diatomeenerden mit einem Gehalt an Cristobalit von < 5 Gew.-%, welche aus unterschiedlichen geographischen Vorkommen stammen und sich im Strukturtyp der ihnen zugrundeliegenden Kieselalgen unterscheiden, mit einer Lösung oder Suspension enthaltend Vanadium, Alkalimetallverbindungen und Sulfat versetzt.

Eine bevorzugte Ausführungsform der Erfindung ist ein Verfahren zur Herstellung der oben beschriebenen Katalysatoren zur Oxidation von SO₂ zu SO₃, dadurch gekennzeichnet, dass man mindestens zwei verschiedene natürlich vorkommende Diatomeenerden mit einem Gehalt an Cristobalit von < 5 Gew.-%, welche aus unterschiedlichen geographischen Vorkommen stammen und sich im Strukturtyp der ihnen zugrundeliegenden Kieselalgen unterscheiden, wobei die verschiedenen Strukturtypen ausgewählt sind aus der Gruppe, bestehend aus tellerförmigen, zylinderförmigen und stäbchenförmigen Strukturtypen, mit einer Lösung oder Suspension enthaltend Vanadium, Alkalimetallverbindungen und Sulfat versetzt.

Ein weiterer Gegenstand der Erfindung ist ein Verfahren zur Oxidation von SO₂ zu SO₃ unter Verwendung der oben beschriebenen Katalysatoren. In einer bevorzugten Ausführungsform der Erfindung wird ein Sauerstoff und Schwefeldioxid SO₂ enthaltendes Gasgemisch bei Temperaturen im Bereich von 340 bis 680 °C mit dem Katalysator in Kontakt gebracht, wobei zumindest ein Teil des Schwefeldioxids zu Schwefeltrioxid SO₃ umgesetzt wird.

Beispiele:
Sämtliche im Folgenden verwendeten Diatomeenerden enthalten weniger als 4 Gew.- % Aluminiumoxid Al₂O₃, weniger als 1,5 Gew.-% Eisen(III)oxid Fe₂O₃ und weniger als 1,0 Gew.-% Erdalkalimetalloxide (Summe aus Magnesiumoxid MgO und Kalziumoxid CaO). Der Anteil an kristallinem Cristobalit lag unterhalb der Bestimmungsgrenze von ca. 1 Gew.-%. Der Glühverlust bei 900°C lag typischerweise zwischen 5 und 12 Gew.- %.

Die Synthese sämtlicher Katalysatoren erfolgte in Anlehnung an DE 4000609 Beispiel 3. Die Bestimmung der Katalysatoraktivität erfolgte ebenfalls in Anlehnung an die in DE 4000609 beschriebene Vorgehensweise.

### Beispiel 1: Vergleichsbeispiel

3,51 kg einer Diatomeenerde des Typs Masis der Fa. Diatomite SP CJSC, Armenien, wurde mit einer Suspension aus 1,705 kg 40%iger KOH, 0,575 kg 25%iger NaOH und 0,398 kg 90%igem Ammoniumpolyvanadat und 2,35 kg 48%iger Schwefelsäure vermischt. Anschließend wurden 250 g einer 7,4 Gew.-% wässrigen Stärkelösung zugegeben, die Mischung intensiv vermischt und zu 11 x 5 mm Sternsträngen verformt. Diese Stränge wurden anschließend bei 120 °C getrocknet und bei 650 °C kalziniert.

### Beispiel 2: Vergleichsbeispiel

3,926 kg einer Diatomeenerde des Typs MN der Fa. EP Minerals LLC, Reno, USA, wurde mit einer Suspension aus 1,701 kg 40%iger KOH, 0,563 kg 25%iger NaOH und 0,398 kg 90%igem Ammoniumpolyvanadat und 2,35 kg 48%iger Schwefelsäure vermischt. Anschließend wurden 250 g einer 7,4 Gew.-% wässrigen Stärkelösung zugegeben, die Mischung intensiv vermischt und zu 11 x 5 mm Sternsträngen verformt. Diese Stränge wurden anschließend bei 120 °C getrocknet und bei 650 °C kalziniert.

Der so dargestellte Katalysator verfügte über eine Porosität von 0,49 ml/g. Die Schneidhärte betrug 74,3 N, der Abrieb 3,0 Gew.-% und das Schüttvolumen 431 g/l (vgl. Tabelle 1).

### Beispiel 3: Vergleichsbeispiel

3,565 kg einer Diatomeenerde des Typs Diatomite 1 der Fa. Mineral Resources Co., Lima, Peru, wurde mit einer Suspension aus 1,666 kg 40%iger KOH, 0,559 kg 25%iger NaOH und 0,396 kg 90%igem Ammoniumpolyvanadat und 2,34 kg 48%iger Schwefelsäure vermischt. Anschließend wurden 250 g einer 7,4 Gew.-% wässrigen Stärkelösung zugegeben, die Mischung intensiv vermischt und zu 11 x 5 mm Sternsträngen verformt. Diese Stränge wurden anschließend bei 120 °C getrocknet und bei 650 °C kalziniert.

### Beispiel 4: Vergleichsbeispiel

3,496 kg einer Diatomeenerde des Typs LCS-3 der Fa. EP Minerals LLC wurde mit einer Suspension aus 1,711 kg 40%iger KOH, 0,587 kg 25%iger NaOH und 0,398 kg 90%igem Ammoniumpolyvanadat und 2,35 kg 48%iger Schwefelsäure vermischt. Anschließend wurden 250 g einer 7,4 Gew.-% wässrigen Stärkelösung zugegeben, die Mischung intensiv vermischt und zu 11 x 5 mm Sternsträngen verformt. Diese Stränge wurden anschließend bei 120 °C getrocknet und bei 650 °C kalziniert.

### Beispiele 5 und 6:

Der Katalysator wurde in Analogie zu den Beispielen 1 bis 4 hergestellt unter Verwendung einer Mischung von Diatomeenerden, die zu 70 Gew.-% aus dem Typ MN der Fa. EP Minerals LLC und zu 30 Gew.-% aus dem Typ Diatomite 1 der Fa. Mineral Resources Co. (Beispiel 5) bzw. unter Verwendung einer Mischung von Diatomeenerden, die zu 70 Gew.-% aus dem Typ LCS-3 der Fa. EP Minerals LLC und zu 30 Gew.-% aus dem Typ Diatomite 1 der Fa. Mineral Resources Co. (Beispiel 6) bestand. Die Zusammensetzung der eigentlichen Aktivkomponente wurde dabei bis auf prozessbedingte geringfügige Schwankungen nicht variiert (Abweichungen < 5 % relativ; SO₄ < 9% relativ).

### Beispiel 7:

Der Katalysator wurde in Analogie zu den Beispielen 1 bis 4 hergestellt unter Verwendung einer Mischung von Diatomeenerden, die zu 20 Gew.-% aus dem Typ MN der Fa. EP Minerals LLC, zu 50 Gew.-% aus dem Typ Masis der Fa. Diatomite SP CJSC und zu 30 Gew.-% aus dem Typ Diatomite 1 der Fa. Mineral Resources Co. bestand. Die Zusammensetzung der eigentlichen Aktivkomponente wurde dabei bis auf prozessbedingte geringfügige Schwankungen nicht variiert (Abweichungen < 5 % relativ; SO₄ < 9% relativ).

### Beispiel 8:

2,753 kg einer Diatomeenerde des Typs MN der Fa. EP Minerals LLC wurde mit einer Suspension aus 0,956 kg Cs₂SO₄, 1,394 kg 47%iger KOH und 0,417 kg 90%igem Ammoniumpolyvanadat und 1,906 kg 48%iger Schwefelsäure vermischt. Anschließend wurden 177 g einer 10,68 Gew.-% wässrigen Stärkelösung zugegeben, die Mischung intensiv vermischt und zu 11 x 5 mm Sternsträngen verformt. Diese Stränge wurden anschließend bei 120 °C getrocknet und bei 510 °C kalziniert.

### Beispiel 9:

3,906 kg einer Diatomeenerde des Typs LCS-3 der Fa. EP Minerals LLC wurden mit einer Suspension aus 1,381 kg Cs₂SO₄, 1,999 kg 47%iger KOH und 0,595 kg 90%i-gem Ammoniumpolyvanadat und 2,769 kg 48%iger Schwefelsäure vermischt. Anschließend wurden 250 g einer 10,68 Gew.-% wässrigen Stärkelösung zugegeben, die Mischung intensiv vermischt und zu 11 x 5 mm Sternsträngen verformt. Diese Stränge wurden anschließend bei 120 °C getrocknet und bei 510 °C kalziniert.

### Beispiel 10:

Der Katalysator wurde in Analogie zu Beispiel 8 und Beispiel 9 hergestellt unter Verwendung einer Mischung von Diatomeenerden, die zu 50 Gew.-% aus dem Typ MN der Fa. EP Minerals LLC, zu 20 Gew.-% aus dem Typ Celite 400 der Fa. Lehmann & Voss & Co, Hamburg, und zu 30 Gew.-% aus dem Typ Diatomite 1 der Fa. Mineral Resources Co. bestand. Die Zusammensetzung der eigentlichen Aktivkomponente wurde dabei bis auf prozessbedingte geringfügige Schwankungen nicht variiert (Abweichungen < 5 % relativ; SO₄ < 9% relativ).

### Beispiel 11:

Der Katalysator wurde in Analogie zu Beispiel 8 und Beispiel 9 hergestellt unter Verwendung einer Mischung von Diatomeenerden, die zu 30 Gew.-% aus dem Typ LCS-3 der Fa. EP Minerals LLC, zu 30 Gew.-% aus dem Typ Masis der Fa. Diatomite SP CJSC und zu 40 Gew.-% aus dem Typ Diatomite 1 der Fa. Mineral Resources Co. bestand. Die Zusammensetzung der eigentlichen Aktivkomponente wurde dabei bis auf prozessbedingte geringfügige Schwankungen nicht variiert (Abweichungen < 5 % relativ; SO₄ < 9% relativ).

Die Kombination aus deutlich verbesserten mechanischen Eigenschaften mit vergleichbaren bzw. erhöhten katalytischen Aktivitäten über den gesamten untersuchten Temperaturbereich der gemäß der Beispiele 5, 6, 7 bzw. 10 und 11 dargestellten Katalysators verdeutlicht die Überlegenheit der erfindungsgemäßen Katalysatoren.

**Tabelle 1: Porenvolumen, Schneidhärte, Abrieb, Rütteldichte und katalytische Eigenschaften der gemäß den Beispielen 1 bis 11 hergestellten Katalysatoren.**

| Beispiel | Zusammensetzung des Trägers [Gew.-%] | Porosität [ml/g] | Schneidhärte [N] | Abrieb [Gew.-%] | Rütteldichte [ml/g] | Aktivität bei 390°C [%] | Aktivität bei 400°C [%] | Aktivität bei 410°C [%] | Aktivität bei 430°C [%] | Aktivität bei 450°C [%] |
|---|---|---|---|---|---|---|---|---|---|---|
| 1 | T/Z/S = 100/0/0 | 0,5 | 76,9 | 3,4 | 463 | 210 | 180 | 160 | 75 | 60 |
| 2 | T/Z/S = 0/100/0 | 0,49 | 74,3 | 3,0 | 431 | 160 | 150 | 100 | 65 | 60 |
| 3 | T/Z/S = 0/0/100 | 0,36 | 150,2 | 1,5 | 560 | 150 | 155 | 155 | 65 | 55 |
| 4 | T/Z/S = 0/100/0 | 0,6 | 49,9 | 13,1 | 394 | - | - | 170 | 75 | 65 |
| 5 | T/Z/S = 0/70/30 | 0,48 | 81,9 | 1,7 | 472 | 205 | 220 | 160 | 65 | 50 |
| 6 | T/Z/S = 0/70/30 | 0,51 | 70,5 | 2,6 | 473 | 390 | 325 | 200 | 80 | 70 |
| 7 | T/Z/S = 50/20/30 | 0,47 | 83,4 | 2,6 | 436 | 235 | 195 | 190 | 95 | 75 |
| 81) | T/Z/S = 0/100/0 | 0,39 | 72,3 | 3,7 | 523 | 110 | 115 | 105 | 90 | 95 |
| 91) | T/Z/S = 0/100/0 | 0,5 | 53,3 | 4,9 | 413 | - | - | - | - | - |
| 101) | T/Z/S = 20/50/30 | 0,38 | 74,2 | 2,2 | 504 | 145 | 125 | 100 | 100 | 100 |
| 111) | T/Z/S = 30/30/40 | 0,39 | 76,1 | 3,7 | 448 | 120 | 115 | 115 | 105 | 105 |

| | | | | | | | | | | |
|---|---|---|---|---|---|---|---|---|---|---|
| 1) Cs-haltiger Schwefelsäurekatalysator T = tellerförmiger Strukturtyp, Z = zylinderförmiger Strukturtyp, S = stäbchenförmiger Strukturtyp | | | | | | | | | | |

## Patentansprüche

1. Katalysator zur Oxidation von SO₂ zu SO₃, erhalten aus mindestens zwei verschiedenen natürlich vorkommenden Diatomeenerden mit einem Gehalt an Cristobalit von < 5 Gew.-% und Vanadiumverbindungen, Alkalimetallverbindungen und Sulfat, **dadurch gekennzeichnet, dass** die mindestens zwei verschiedenen natürlich vorkommenden Diatomeenerden aus unterschiedlichen geographischen Vorkommen stammen und sich im Strukturtyp der ihnen zugrundeliegenden Kieselalgen unterscheiden.

2. Katalysator nach Anspruch 1, **dadurch gekennzeichnet, dass** die verschiedenen Strukturtypen ausgewählt sind aus der Gruppe, bestehend aus tellerförmigen, zylinderförmigen und stäbchenförmigen Strukturtypen.

3. Katalysator nach einem der Ansprüche 1 oder 2, **dadurch gekennzeichnet, dass** jede der verschiedenen zu seiner Herstellung verwendeten Diatomeenerden einen Anteil bezogen auf die gesamte Masse an verwendeten Diatomeenerden von mindestens 10 Gew.-% hat.

4. Verfahren zur Herstellung eines Katalysators zur Oxidation von SO₂ zu SO₃, **dadurch gekennzeichnet, dass** man mindestens zwei verschiedene natürlich vorkommende Diatomeenerden mit einem Gehalt an Cristobalit von < 5 Gew.-%, welche aus unterschiedlichen geographischen Vorkommen stammen und sich im Strukturtyp der ihnen zugrundeliegenden Kieselalgen unterscheiden, mit einer Lösung oder Suspension enthaltend Vanadium, Alkalimetallverbindungen und Sulfat versetzt.

5. Verfahren nach Anspruch 4, **dadurch gekennzeichnet, dass** die verschiedenen Strukturtypen ausgewählt sind aus der Gruppe, bestehend aus tellerförmigen, zylinderförmigen und stäbchenförmigen Strukturtypen.

6. Verfahren zur Oxidation von SO₂ zu SO₃ unter Verwendung eines Katalysators nach einem der Ansprüche 1 bis 3.

7. Verfahren nach Anspruch 6, wobei ein Sauerstoff und Schwefeldioxid SO₂ enthaltendes Gasgemisch bei Temperaturen im Bereich von 340 bis 680 °C mit dem Katalysator in Kontakt gebracht wird.

## Claims

1. A catalyst for the oxidation of SO₂ to SO₃, obtained from at least two different naturally occurring diatomaceous earths having a content of cristobalite of < 5% by weight and from vanadium compounds, alkali metal compounds and sulfate, wherein the at least two different naturally occurring diatomaceous earths originate from different geographic deposits and differ in the structure type of the siliceous algae from which they are derived.

2. The catalyst according to claim 1, wherein the different structure types are selected from the group consisting of plate-shaped, cylindrical and rod-shaped structure types.

3. The catalyst according to either of claims 1 and 2, wherein each of the different diatomaceous earths used for producing the catalyst has a proportion based on the total mass of diatomaceous earths used of at least 10% by weight.

4. A process for producing a catalyst for the oxidation of SO₂ to SO₃, wherein at least two different naturally occurring diatomaceous earths having a content of cristobalite of < 5% by weight, which originate from different geographic deposits and differ in the structure type of the siliceous algae from which they are derived, are admixed with a solution or suspension comprising vanadium, alkali metal compounds and sulfate.

5. The process according to claim 4, wherein the different structure types are selected from the group consisting of plate-shaped, cylindrical and rod-shaped structure types.

6. A process for the oxidation of SO₂ to SO₃ using a catalyst according to any of claims 1 to 3.

7. The process according to claim 6, wherein a gas mixture comprising oxygen and sulfur dioxide SO₂ is brought into contact at temperatures in the range from 340 to 680°C with the catalyst.

## Revendications

1. Catalyseur pour l'oxydation du SO₂ en SO₃, obtenu à partir d'au moins deux terres de diatomées naturelles différentes ayant une teneur en cristobalite < 5 % en poids et de composés du vanadium, de composés de métaux alcalins et d'un sulfate, **caractérisé en ce que** les au moins deux terres de diatomées naturelles et différentes proviennent d'aires géographiques différentes, et se distinguent par le type de structure des diatomées qui les constituent.

2. Catalyseur selon la revendication 1, **caractérisé en ce que** les différents types de structure sont choisis dans le groupe consistant en les types de structure discoïdaux, cylindriques et bacilliformes.

3. Catalyseur selon l'une des revendications 1 ou 2, **caractérisé en ce que** chacune des différentes terres de diatomées utilisées pour sa fabrication présente une proportion, rapportée à la masse totale des terres de diatomées utilisées, d'au moins 10 % en poids.

4. Procédé de fabrication d'un catalyseur pour l'oxydation du SO₂ en SO₃, **caractérisé en ce qu'**on ajoute à au moins deux terres de diatomées naturelles différentes, ayant une teneur en cristobalite < 5 % en poids, qui proviennent d'aires géographiques différentes et se caractérisent par le type de structure des diatomées qui les constituent, une solution ou une suspension contenant du vanadium, des composés de métaux alcalins et un sulfate.

5. Procédé selon la revendication 4, **caractérisé en ce que** les différents types de structure sont choisis dans le groupe consistant en les types de structure discoïdaux, cylindriques et bacilliformes.

6. Procédé pour l'oxydation du SO₂ en SO₃ par utilisation d'un catalyseur selon l'une des revendications 1 à 3.

7. Procédé selon la revendication 6, dans lequel on met en contact avec le catalyseur un mélange gazeux contenant de l'oxygène et du dioxyde de soufre SO₂, à des températures dans la plage de 340 à 680 °C.
